# EUROPÄISCHE PATENTANMELDUNG

(11) **EP 1 237 246 A1**
(43) Veröffentlichungstag der Anmeldung: **04.09.2002**
(21) Anmeldenummer: 02090065.0
(22) Anmeldetag: 20.02.2002
(51) Int. Cl.: H02B 1/56

(54) **Behälter für eine gasisolierte elektrische Schaltanlage mit Wärmetauscher**

(30) Priorität: 01.03.2001 DE 10111846
(71) Anmelder: SIEMENS AKTIENGESELLSCHAFT, 80333 München (DE)
(72) Erfinder: Czech, Waldemar, 63691 Ranstadt (DE); Reiher, Thomas, 64823 Gross Umstadt (DE); Spaeck, Helmut, 63739 Aschaffenburg (DE)

(57) **Zusammenfassung**

Die Erfindung betrifft einen Behälter (BEH) für eine gasisolierte elektrische Schaltanlage, bei dem mindestens ein Teil einer Wand des Behälters (WBH) als Wärmetauscher durch kanalbildende Elemente derart ausgebildet ist, dass innerhalb des Behälters (BEH) Gaskanäle (GAK) und außerhalb des Behälters (BEH) Luftkanäle (LUK) entstehen,

Die kanalbildenden Elemente sind durch eine Faltwand (FTW) realisiert, die einstückig ausgebildet und integraler Bestandteil der Wand des Behälters (WBH) ist.

Derartige Behälter sind in gasisolierten elektrischen Schaltanlagen zur Energieversorgung und -verteilung vorgesehen.

## Beschreibung

Die Erfindung betrifft einen Behälter für eine gasisolierte elektrische Schaltanlage, bei dem mindestens ein Teil einer Wand des Behälters als Wärmetauscher durch kanalbildende Elemente derart ausgebildet ist, dass innerhalb des Behälters Gaskanäle und außerhalb des Behälters Luftkanäle entstehen.

Ein Behälter der eingangs definierten Art ist aus der Druckschrift WO 91/06995 bekannt. Dabei sind an einer Wand des Behälters rippenähnliche Bleche angebracht, um über die sich bildenden Gaskanäle im Innenbereich und die sich bildenden Luftkanäle im Außenbereich die Übertragung der Verlustwärme von innen nach außen zu ermöglichen.
Desweiteren ist es der gleichen Druckschrift zu entnehmen, die rippenähnlichen Bleche direkt in die Wand des Behälters zu integrieren um damit die Wärmeabstrahlfläche insgesamt zu vergrößern. Außerdem ist dort vorgeschlagen, den Wärmeaustausch durch von außen auf die rippenähnlichen Bleche einwirkende Gebläse oder mittels direkt durch die Bleche geleitete Kühlflüssigkeit zu erhöhen.

Bei gasisolierten Mittelspannungsschaltanlagen ist es allgemein üblich, die auftretende Verlustwärme durch freie Konvektion und Abstrahlung über eine oder mehrere glatte Behälterwände direkt an die Umgebung abzuführen bzw. in belüftete Druckentlastungskanäle zu überführen.
Allgemein bekannt ist es ebenfalls, zur verbesserten Wärmeabfuhr luftdurchströmte Doppelwände vorzusehen.

Die der Erfindung zugrunde liegende Aufgabe besteht darin, Behälter für gasisolierte elektrische Schaltanlagen zu konzipieren, die den erhöhten Anforderungen auch bei allgemein angestrebter Steigerung ihrer kompakten Bauweisen mit entsprechend einhergehender Reduzierung ihres Anlagenvolumens gerecht werden und darüber hinaus auch den gleichzeitig zunehmend höheren elektrischen Belastungen standhalten. Erfindungsgemäß wird dies durch die Merkmale
1.1 die kanalbildenden Elemente sind durch eine Faltwand realisiert,
1.2 die Faltwand ist integraler Bestandteil der Wand des Behälters,
1.3 die Faltwand ist einstückig ausgebildet, erreicht.

Mit der Realisierung der kanalbildenden Elemente durch die erfinderische Faltwand ist erreicht, das die innerhalb des Behälters befindlichen Gaskanäle unmittelbar durch die außerhalb des Behälters befindlichen Luftkanälen gebildet sind und damit eine erheblich höhere Wärmeübertragung gegenüber den bisher bekannten Einrichtungen zulassen. Durch die einstückige Ausbildung der Faltwand, die gleichzeitig die eigene Wand des Behälters bildet, ist darüber hinaus die Oberflächenvergrößerung der Wand des Behälters voll wirksam zur Wärmeübertragung nutzbar.

Die gleiche Aufgabe ist erfindungsgemäß durch die Merkmale
2.1 die kanalbildenden Elemente sind durch eine Faltwand realisiert,
2.2 die Faltwand und die Wand des Behälters sind derart miteinander verbunden, dass innerhalb des Behälters schlitzförmige Öffnungen mit sich daran anschließenden Gaskanälen und außerhalb des Behälters Luftkanäle gebildet sind,
2.3 die Faltwand ist durch ein oberes Kammblech und durch ein unteres Kammblech derart verbunden, dass die Gaskanäle nach außen hermetisch verschlossen sind,
gelöst.
Die Faltwand und mit mindestens einer Wand des Behälters in der beanspruchten Weise mit einander zu kombinieren, lässt bei gleicher Wirkungsweise bezüglich der Funktion des Wärmetauschens größere Freiheiten in der konstruktiven Ausgestaltung der Faltwand zu. Mit dem oberen und unteren Kammblech sind die Gaskanäle im Inneren des Behälters in gleiches Weise gasdicht verschlossen wie bei der einstückigen Ausgestaltung der Faltwand.

Gemäß einer vorteilhaften Weiterbildung der Erfindung sind die Merkmale
3.1 die Faltwand ist derart strukturiert, dass Begrenzungen der Gaskanäle gleichermaßen Begrenzungen der Luftkanäle bilden,
3.2 die Gaskanäle und die Luftkanäle sind zur Gaskonvektionsströmung und zur Luftkonvektionsströmung parallel angeordnet,
vorgesehen.
Mit dieser vorteilhaften Weiterbildung ist für die Faltwand die größtmögliche Wärmetauscherfunktion verbunden, da die Gaskonvektionsströmung und die dazu gegenläufige Luftkonvektionsströmung vollflächig aufeinander einwirken.

Gemäß einer weiteren vorteilhaften Weiterbildung der Erfindung ist das Merkmal
4.1 der Behälter ist innerhalb der elektrischen Schaltanlage derart angeordnet, dass die Gaskanäle und die Luftkanäle gemeinsam in einen den Behälter umgebenen, die Luftkonvektionsströmung fördernden Bereich hineinragen,
vorgesehen.
Mit dieser Maßnahme, den Behälter beispielsweise in wärmestaufreien Lüftungs- bzw. Druckentlastungskanälen anzuordnen, ist der Wärmeaustausch noch zusätzlich verbessert.

Die Erfindung wird durch ein figürlich dargestelltes Ausführungsbeispiel in vier Figuren näher erläutert, wobei
- die Figur 1: die Wand des Behälters (WHB) in der Vorderansicht aus der Sicht ins Innere des Behälters (BEH, Fig.4)mit der zugehörigen Seitenansicht zeigt,
- die Figur 2: die Draufsicht auf die Wand des Behälters (WBH) abbildet,
- die Figur 3: das obere und untere Kammblech (KBO, KBU) erkennen lässt, und
- die Figur 4: einen Ausschnitt des Behälters (BEH) in perspektivischer Ansicht darstellt.

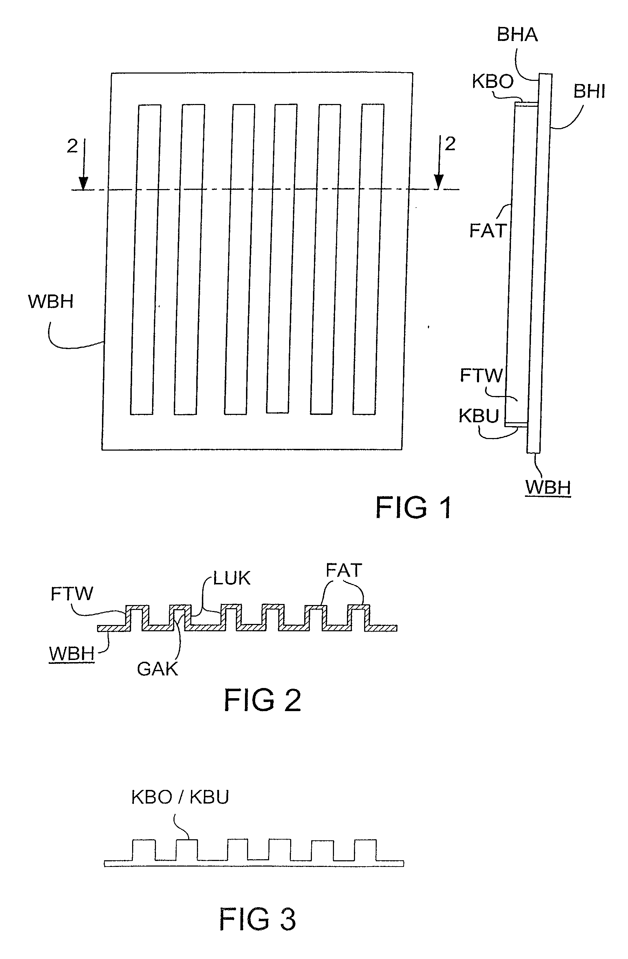

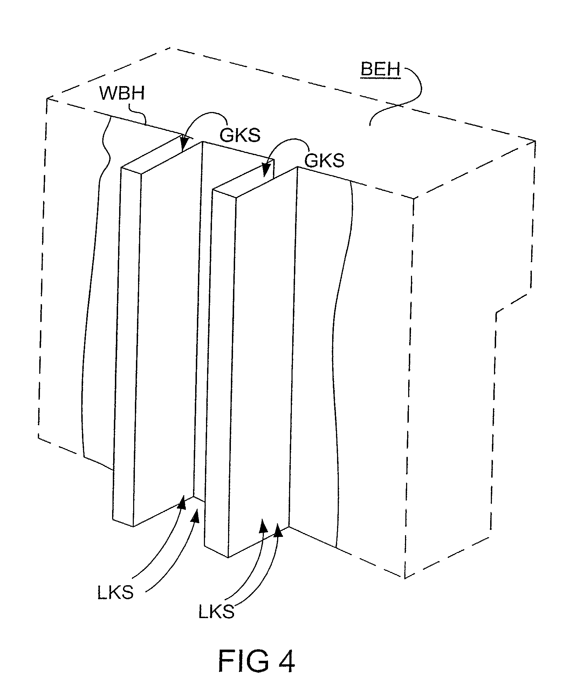

Die Figur 1 zeigt die Wand des Behälters (WBH) mit der mittig angeordneten Struktur der Faltwand (FTW) in der Forderansicht aus der Sicht ins Innere des Behälters (BEH, Fig.4) mit der zugehörigen Seitenansicht. In dieser Darstellung ist besonders erkennbar, dass die Wand des Behälters (WBH) im Bereich der Behälterinnenseite (BHI) die Struktur der Faltwand (FTW) mit nicht bezeichneten schlitzförmigen Öffnungen aufweist, deren Erstreckung zur Behälteraußenseite (BHA) durch die Falttaschen (FAT) gegeben ist. Gleichzeitig ist durch die Seitenansicht angedeutet, dass die Falttaschen (FAT) - erkennbar ist lediglich die äussere Falttasche - bei nicht einstückiger Ausführung der Faltwand (FTW) mit dem oberen Kammblech (KBO) und dem unteren Kammblech (KBU) verschlossen sind, so dass die in Figur 2 dargestellten Gaskanäle (GAK) oben und unten verschlossen sind und damit über die Behälteraußenseite (BHA) direkt in einen nicht dargestellten Bereich, beispielsweise eines Druckentlastungskanals, hineinreichen können.

Die Wand des Behälters (WHB) ist bei nicht einstückiger Ausführung mit dem dann ebenfalls separaten Faltwand (FTW) gasdicht verschweißt.
Nähere Einzelheiten dieser Faltwand (FTW) sind aus der durch die Schnittebene 2-2 gegebenen Figur 2 ersichtlich.
Aus der Draufsicht wird besonders deutlich, dass die Faltwand (FTW) derart mit der Wand des Behälters (WBH) in Verbindung steht, dass sich die aus den Falttaschen (FAT) gebildeten Gaskanäle (GAK) im Inneren des Behälters (BEH, Fig.4))und die außerhalb des Behälters (BEH, Fig.4) liegenden Luftkanälen (LUK) praktisch nebeneinander angeordnet sind und gemeinsam in den Bereich eines nicht dargestellten Druckentlastungskanals hineinragen können.

Die Figur 3 zeigt eine der möglichen Ausgestaltungen des oberen und des unteren Kammbleches (KBO, KBU) zur hermetischen Abdichtung der Gaskanäle (GAK).

Die Figur 4 zeigt den Behälter (BEH) der gasisolierten elektrischen Schaltanlage mit der wärmeableitenden Wand des Behälters (WBH) in perspektivischer Darstellung, aus der insbesondere durch die gekrümmten Doppelpfeile die sich einstellende Luftkonvektionsströmung (LKS) im oben und unten offenen Luftkanal angedeutet ist, während die Gaskonvektionsströmung (GKS) innerhalb der geschlossenen Gaskanäle mit dem gekrümmten Einzelpfeil verdeutlicht ist. In besonderer Weise sind damit die gegeneinandergerichteten Strömungsverläufe erkennbar, mit denen die optimale Wärmeübertragung vom Innenbereich des Behälters (BEH) nach außen erreicht ist.

## Patentansprüche

1. Behälter für eine gasisolierte elektrische Schaltanlage, bei dem mindestens ein Teil einer Wand des Behälters als Wärmetauscher durch kanalbildende Elemente derart ausgebildet ist, dass innerhalb des Behälters Gaskanäle und außerhalb des Behälters Luftkanäle entstehen,
**gekennzeichnet durch** die Merkmale
1.1 die kanalbildenden Elemente sind **durch** eine Faltwand (FTW) realisiert,
1.2 die Faltwand (FTW) ist integraler Bestandteil der Wand des Behälters (WBH),
1.3 die Faltwand (FTW) ist einstückig ausgebildet.

2. Behälter für eine gasisolierte elektrische Schaltanlage, bei dem mindestns ein Teil einer Wand des Behälters als Wärmetauscher durch kanalbildende Elemente derart ausgebildet ist, dass innerhalb des Behälters Gaskanäle und außerhalb des Behälters Luftkanäle entstehen,
**gekennzeichnet durch** die Merkmale
2.1 die kanalbildenden Elemente sind **durch** eine Faltwand (FTW) realisiert,
2.2 die Faltwand (FTW) und die Wand des Behälters (WBH) sind derart miteinander verbunden, dass innerhalb des Behälters (BEH) schlitzförmige Öffnungen mit sich daran anschließenden Gaskanälen (GAK) und außerhalb des Behälters (BEH) Luftkanäle (LUK) gebildet sind,
2.3 die Faltwand (FTW) ist **durch** ein oberes Kammblech (KBO) und **durch** ein unteres Kammblech (KBU) derart verbunden, dass die Gaskanäle (GAK) nach außen hermetisch verschlossen sind.

3. Behälter für eine gasisolierte elektrische Schaltanlage nach Anspruch 1 oder Anspruch 2,
**gekennzeichnet durch** die Merkmale
3.1 die Faltwand (FTW) ist derart strukturiert, dass Begrenzungen der Gaskanäle (GAK) gleichermaßen Begrenzungen der Luftkanäle (LUK) bilden,
3.2 die Gaskanäle (GAK) und die Luftkanäle sind zur Gaskonvektionsströmung (GKS) und zur Luftkonvektionsströmung (LKS) parallel angeordnet.

4. Behälter für eine gasisolierte elektrische Schaltanlage nach Anspruch 3,
**gekennzeichnet durch** das Merkmal
4.1 der Behälter (BEH) ist innerhalb der elektrischen Schaltanlage derart angeordnet, dass die Gaskanäle (GAK) und die Luftkanäle (LUK) gemeinsam in einen den Behälter (BEH) umgebenen, die Luftkonvektionsströmung (LKS) fördernden Bereich hineinragen.
